# EUROPEAN PATENT APPLICATION

(11) **EP 3 282 262 A1**
(43) Date of publication of application: **14.02.2018**
(21) Application number: 16183601.0
(22) Date of filing: 10.08.2016
(51) Int. Cl.: G01N 35/00

(54) **CASSETTE FOR A MICROSCOPE, MICROSCOPE WITH SUCH A CASSETTE AND METHOD OF MICROSCOPING WITH SUCH A MICROSCOPE**

(71) Applicant: CytoScience SA, 2046 Fontaines (CH)
(72) Inventor: Jones, David, 25301 Hostivice (CZ); Heino, Harri, 33340 Tampere (FI); Kalves, Tom, 33980 Pirkkala (FI); Palonen, Henry, 33300 Tampere (FI)
(74) Representative: Kasseck, Christoph

(57) **Abstract**

Cassette (1) for upgrading a microscope or for being an integral part of a microscope, comprising a first reel (3), a second reel (4) and a first tape (5). The first tape (5) is wound onto the first reel (3) and can be wound onto the second reel (4). The first reel (3) and the second reel (4) are spaced apart from each other so that an objective area (6) is reserved for positioning of an objective (7) of the microscope. The first tape (5) comprises an optically transparent fluoropolymer.

## Description

The invention relates to a cassette for upgrading a microscope or for being an integral part of a microscope, comprising a first reel, a second reel and a first tape, wherein the first tape is wound onto the first reel and can be wound onto the second reel, wherein the first reel and the second reel are spaced apart from each other so that an objective area is reserved for positioning of an objective of the microscope.

Such cassettes for being an integral part of a microscope are described in WO 85/05601 A1. A cassette with a first and a second reel further comprises a tape which can travel from the first to the second reel. Samples are applied onto the tape by using an automated syringe. The samples are fixed on the tape and are stained afterwards in a fluorescence staining bath. After being examined via an objective, the according section of the tape is finally wound onto the second reel. The tape is made of polyester.

However, it was found that in said known microscopes the samples move out of the depth of focus of the objective many times during lifetime of the cassette. Accordingly, the user has to adjust the first tape regarding its height position many times which reduces the effectiveness of automated microscopy. The invention is thus based on the technical problem to overcome the disadvantage of the known microscopes. The invention is especially based on the technical problem to improve the effectiveness of automated microscopy.

For solving this problem the invention teaches a cassette for upgrading a microscope or for being an integral part of a microscope, comprising a first reel, a second reel and a first tape, wherein the first tape is wound onto the first reel and can be wound onto the second reel, wherein the first reel and the second reel are spaced apart from each other so that an objective area is reserved for positioning of an objective of the microscope, wherein the first tape is optical transparent, wherein the first tape comprises a fluoropolymer.

The invention is based on the finding that tapes made of fluoropolymers provide a very low variation of the thickness of the tapes. If an objective with a very low depth of field is used, the thickness variation of the tape is critical since it might happen that the plane of the sample drifts out of the depth of field. The user then has to adjust manually the height position of the first tape relative to the objective in order to bring the sample plane back into the depth of field. Thus, tapes made of fluoropolymers solve the above mentioned problem.

It is within the scope of invention that the fluoropolymer of the first tape has a main chain, which main chain only comprises carbon atoms. It is preferred, that the fluoropolymer of the first tape is preferably polytetrafluoroethylene (PTFE), polychlorotrifluoroethylene (PCTFE), fluorinated ethylene propylene (FEP), perfluoroalkoxy alkane (PFA), or ethylene-tetrafluoroethylene (ETFE). The most preferred fluoropolymer is polychlorotrifluoroethylene. The variation of the thickness of the first tape over 100 m is advantageously less than 20 %, preferred less than 10 % and very preferred less than 7 %. In the most preferred embodiment, the variation of the thickness of the first tape over 30 m is less than 5 %. It is preferred that the first tape has an absorption coefficient α at 150 nm of less than 1 x 10⁻⁴ cm⁻¹ and preferably of less than 0.5 x 10⁻⁴ cm⁻¹.

It is practicable that the first tape is at least 3 µm, preferred at least 5 µm, and most preferred at least 10 µm thick. Advantageously, the thickness of the first tape amounts up to 150 µm, preferred up to 100 µm and most preferred up to 50 µm. The width of the tape can be at least 10 mm, preferential at least 15 mm and very preferential at least 20 mm. The width of the first tape might reach up to 60 mm, preferred up to 50 mm and very preferred up to 40 mm. The length of the tape might reach up to 20, 50 or even 100 m.

According to a very preferred embodiment, the first tape comprises a fixed fluorescence dye. The fluorescence dye is preferably fixed onto a surface, advantageously on the upper surface, of the first tape. The fluorescence dye might be fixed with drying and especially with freeze-drying. Advantageously, the fixed fluorescence dye is mixed with polyvinyl alcohol (PVA). It is within the scope of the invention that the fluorescence dye is fixed on the first tape in the shape of spots. The spots of the fluorescence dye might be arranged in a long line, wherein the spots preferably have a uniform distance between each other. According to a very preferred embodiment, the fixed fluorescence dye is arranged on a section of the first tape, which is wound onto the first reel. This means in other words that the fluorescence dye is advantageously pre-arranged on the first tape and means especially that the user did not arrange the fixed fluorescence dye on the first tape.

According to a very preferred embodiment the fluoropolymer of the first tape has undergone a surface treatment resulting in a lowered contact angle with water compared to an untreated fluoropolymer of the same type. Preferably, the contact angle with water of the first tape is lower than 95°, more preferably lower than 90° very preferably lower than 85°, and even more preferably lower than 60°, 40°, or 20°. The surface treatment can be realised for example with plasma, corona discharge or sodium etching.

It is within the scope of invention that the cassette is designed so that the first tape experiences a tension at least in the objective area and wherein preferably the tension is created by a tension apparatus. The tension apparatus can be disposed upstream and/or downstream of the objective area. The tension apparatus can comprise at least one element, for example a bar, which is movable in height direction in order to increase or decrease the tension of the first tape. It is possible that the height movable element of the tension apparatus is controlled by a spring which permanently applies the same tension onto the height movable element in order to guarantee a constant tension of the first tape in the objective area. The spring advantageously exerts a force in height direction (upwards and/or downwards). It is very preferred that the tension apparatus is located at the first and/or second reel. Practicably, the tension apparatus comprises a reel drive for the second reel and advantageously a mechanical resistance applied onto the (first) tape upstream of the objective area. The reel drive for the second reel can be, for example, a motor or a manual drive. The mechanical resistance might be applied onto the first reel or directly onto the (first) tape by a resistance element between the first reel and the objective area.

According to a preferred embodiment of the invention, a support is arranged in the objective area, wherein the first tape can slide over or under the support so that the height position of the first tape in the objective area is defined. Preferentially, the height position of the first tape at the support is higher or lower than the height position of the first tape at the enclosing element. The height positions of the first tape at the support and at the enclosing element can differ in at least 1 mm, preferably in at least 2 mm. The support is preferably movable in height direction in order to adjust the height position of the first tape with respect to a depth of field of the objective. The support advantageously comprises a window which allows transmission of optical beams and especially beams of a backlight of a microscope. The support comprises, for example, a glass plate or, more preferred, two support bars with a gap between these two support bars. The support can have a low friction surface, for example a teflon coated surface. The gap might be at most 60 mm, preferably at most 40 mm, and most preferably at most 20 mm. The support can comprise known means for height adjustment like a screw system or a hydraulic system. In another embodiment, the support can be spring loaded in height direction. By applying a certain tension onto the tap via the tension apparatus, the support reacts accordingly by displacement in height direction.

It is in the scope of invention that the cassette comprises a steriliser which is preferably located downstream of the objective area. The steriliser is advantageously arranged adjacent to the second reel. It is preferred that the steriliser comprises at least one UV-lamp and preferably two UV-lamps, wherein the at least one UV-lamp emits preferentially light below 300 nm and further preferential above 200 nm. The UV-lamps advantageously provide an intensity of at least 10 mW/cm², more advantageously of at least 20 mW/cm² and most preferably at least 30 mW/cm².

According to a very preferred embodiment, the cassette comprises an enclosing element for enclosing specimen, wherein the enclosing element comprises preferably a pair of enclosing bars. The enclosing bars are preferably fixed so that they do not rotate if the moving (first) tape contacts them. The enclosing bars have advantageously a low friction coefficient due to, for example, a teflon coated surface.The pair of enclosing bars is preferably configured so that the two rollers form a non-rotating calender. The enclosing element is advantageously designed so that it provides a pressure onto the first tape. The enclosing element is preferably situated upstream of the objective area and downstream of the first reel. More preferably, the enclosing element is disposed downstream of a sample applying section of the first tape and preferably upstream of the support/the objective area. The enclosing bars can be cylinder shaped. The enclosing bars can also be shaped concave in a middle section of the bars, wherein the outer sections of the bars can have a cylindrical shape.

According to a very preferred embodiment, the first tape comprises in the objective area at least two layers, and preferably only two layers, made of fluoropolymer. The two-layer-structure can be achieved via folding or via joining the first tape with a second tape.

One important embodiment of the invention is characterized in that the first tape comprises an unfolded section upstream of the enclosing element and a folded section downstream of the enclosing element. It is preferred, that the section of the first tape which is wound onto the first reel belongs to the unfolded section of the first tape whereas, preferably, the objective area is a part of the folded section of the first tape. Practicably, the tape from the first tape which is wound onto the second reel is part of the folded section of the first tape. It lies within the scope of the invention that the axis of the first reel is twisted regarding to the axis of the second reel in order to achieve a fold of the first tape at the enclosing element.

According to another important embodiment of the invention, the cassette comprises a third reel and a second tape and wherein the second tape is wound onto the third reel and wherein preferably the enclosing element is designed so that it presses the first tape and the second tape together. The second tape might have characteristics which are in the range of the already explained characteristics of the first tape. According to a very special embodiment of the invention, the second tape has exactly the same properties like the first tape. The first reel might be located above and beyond of the first tape and is preferably located above the first tape. The third reel is advantageously situated upstream of the objective area and especially upstream of the enclosing element. The third reel and/or the second reel and/or the first reel comprises preferably flanges for guiding the first and/or the second tape.

Practicably, the first tape and/or the second tape comprises an adhesive and/or the cassette comprises a welder, preferably an ultrasonic welder or a heat welder. The adhesive is preferably applied onto the first and/or the second tape in the form of a stripe on one edge or on the two edges of the first tape and/or of the second tape. The stripe or the stripes are preferably applied continuously on the first tape and/or on the second tape. The adhesive advantageously comprises cross-stripes which run across the width of the first tape and/or the second tape. The cross-stripes practicably have a uniform distance between each other so that they form separated sample cells on the first tape and/or on the second tape. According to a very preferred embodiment, the spots of the fluorescence dye are each located between two cross-stripes of adhesive. The stripes on the edges of the first tape and/or of the second tape have a width of preferably at least 1 mm, more preferably at least 2 mm and most preferably 3 mm, whereas the width amounts at most 10 mm, preferably 7 mm and most preferably 5 mm. The cross-stripes have a width of preferably at least 2 mm, more preferably at least 4 mm and most preferably at least of 5 mm. The width of the cross-stripes of the adhesive is preferably up to 15 mm, more preferably up to 12 mm and most preferably up to 10 mm. The thickness of the adhesive can be at least 2 µm, preferred at least 3.5 µm and most preferred at least 5 µm, whereas the maximum thickness of the adhesive can be up to 50 µm, preferred up to 35 µm and most preferred up to 20 µm.

The invention also teaches a microscope, comprising an objective and a cassette, especially a cassette according to the invention as described above, wherein the cassette comprises a first reel and a second reel and a first tape, wherein the first tape is wound onto the first reel and can be wound onto the second reel, wherein the first reel and the second reel are spaced apart from each other so that an objective area is reserved for positioning of the objective, wherein the first tape is optical transparent and wherein the first tape comprises a fluoropolymer. According to an embodiment, the cassette comprises a housing, and wherein the objective is separated from the housing. Another preferred embodiment envisages that the objective is integrated into the housing.

It is within the scope of the invention that the microscope is a fluorescence microscope and preferably an epifluorescence microscope. Advantageously, the microscope comprises a backlight and/or an excitation light source. It is preferred that the microscope comprises a lamp, preferably a lamp with a light emitting diode, which is designed to emit flash light. The lamp emitting flash light can be the backlight and/or the excitation light source. The flash light emitting lamp is preferably designed to emit light flashes with a pulse width of at least 10 µs and preferred of at least 100 µs. The light flashes can have a pulse width of up to 100 ms and preferred up to 10 ms.

It is within the scope of the invention that the microscope is an optical microscope. The optical microscope preferentially comprises a backlight, wherein the backlight is arranged on the opposite side of the first tape with respect to the objective. The backlight is preferably situated below the first tape. The backlight can comprise a white light source and preferably a white LED. Advantageously a camera is mounted on the objective so that eyepieces are not necessary. The excitation light source preferably provides ultraviolet and/or blue excitation light. The excitation light source practicably comprises an LED. The excitation light source is practicably situated on the other side of the objective compared to the first tape.

It is preferred that the objective comprises a magnification of lower than factor 25, more preferred of lower than factor 20 and most preferred of lower than factor 15. It is desirable that the magnification of the objective is higher than factor 5, preferred higher than factor 8 and most preferred higher than factor 10. The numerical aperture of the objective is preferential above 0.3, preferred above 0.4 and most preferred above 0.5, whereas the numerical aperture of the objective advantageously amounts at most 1.2, very advantageously at most 1.0 and most advantageously at most 0.8. It is within the scope of the invention that the microscope including the objective is designed so that the microscope provides clear images when the objective is in contact with the first tape or the second tape.

For the solution of the problem the invention teaches a method for microscopic observation of the specimen, wherein a microscope - especially a microscope according to the invention and as described above - comprises an objective and a cassette, wherein the cassette comprises a first reel, a second reel and a first tape, wherein the first tape is wound onto the first reel and can be wound onto the second reel, wherein the first reel and the second reel are space apart from each other so that an objective area is reserved for the objective, wherein the first tape is optical transparent, wherein the first tape comprises a fluoropolymer, wherein the first tape passes the objective, wherein the first tape is then wound onto the second reel.

The invention is explained by means of a drawing comprising two schematic figures showing two embodiments:
Fig. 1 is a perspective view of a first cassette according to the invention and
Fig. 2 is a side view of a second cassette according to the invention.

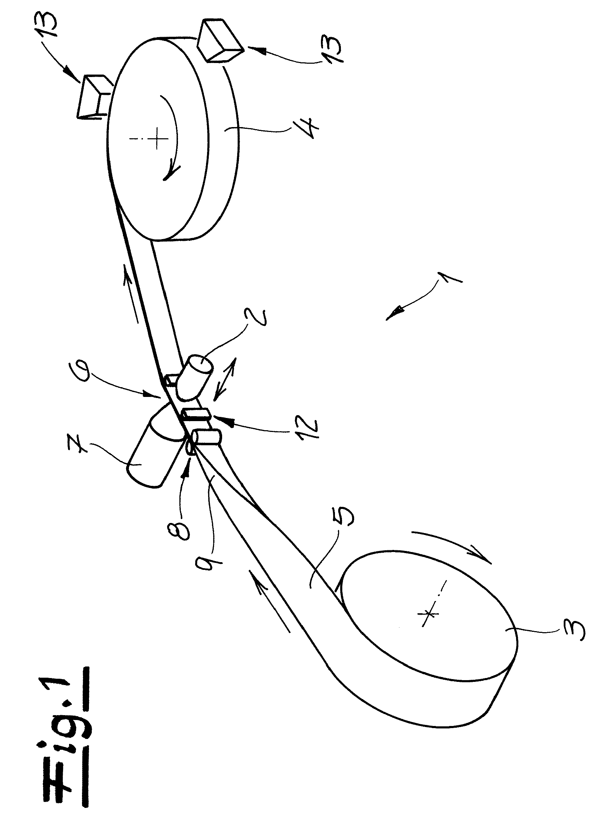

Figure 1 shows a first embodiment of the cassette 1 according to the invention. The cassette 1 comprises a first reel 3, a second reel 4 and a first tape 5. At the beginning of the usage of the cassette 1, the whole first tape 5 is wound onto the first reel 3 and will successively conveyed to the second reel 4, until the whole first tape 5 is wound onto the second reel 4. The user then has to replace the cassette 1 by a new cassette. The cassette 1 can be designed for upgrading a conventional microscope or can be designed for being an integral part of a microscope which is designed to comprise such a cassette 1.

During operation, the first tape 5 is led to an enclosing element 8 in the form of a pair of enclosing bars and slides then over a support 12. Above and below the support 12 in the form of two thin bars are disposed an objective 7 and a backlight 2 in the form of a white LED, respectively. The objective 7 as well as the backlight 2 are not necessarily parts of the cassette 1 but are parts of a microscope, to which the cassette 1 can be added. However, the dimensions of the microscope 7 define an objective area 6 in the cassette 1 which is reserved for positioning of the objective 7. There is a small gap of 0.12 mm between the objective 7 and the first tape 5. The first tape 5 is finally wound onto the second reel 4.

Between the first reel 3 and the enclosing element 8 is a sample applying section, where the user can apply samples/specimen onto the first tape 5, for example with a syringe (not shown). After the sample is applied, the first tape 5 gets folded with the help of the pair of enclosing bars in order to enclose the sample in the folded first tape 5. The axis of the first reel 3 is - regarding to the axis of the second reel 4 - twisted about 90° so that the fold is created.

The first tape 5 is optical transparent which means that it is suitable for using it in a microscope. It is especially optical transparent in the sense that microscopic structures can be observed through the first tape 5. According to the invention, the first tape 5 is made of a fluoropolymer and is especially made of polychlorotrifluoroethylene (PCTFE). The first tape 5 has a thickness of 15 µm, a length of 50 m and a width of 30 mm. The first tape 5 has a very low variation of thickness which is less than 7 % over 100 m. The first tape 5 comprises an adhesive stripe on its inner surface along one of the sides (not shown). This adhesive stripe is 3 mm to 5 mm wide and ensures a safe enclosure of the samples. Furthermore, the first tape 5 comprises periodically arranged adhesive stripes (5 mm to 10 mm wide) across the first tape 5 to separate the samples from each other.

The first tape 5 has undergone a surface treatment resulting in a lowered contact angle with water. The contact angle of this embodiment is 60° and was achieved by plasma treatment. The cassette 1 further comprises a steriliser 13 in the form of two UV-lamps which are located downstream of the objective area 6 and adjacent to the second reel 4. The UV-lamps each provide an intensity of 40 mW/cm² at a wavelength of 260 nm.

A tension apparatus comprises a motor of the second reel 4 and a mechanical resistance at the first reel 3. This tension apparatus applies a tension onto the first tape 5, so that a tension and flatness of the first tape 5 within the objective area 6 is ensured. The support 12 is spring loaded so that the height position of the first tape 5 in the objective area 6 of the cassette 1 can be controlled via the tension apparatus. In combination with the very low thickness variation of the first tape 5 the user has - even with a very low depth of field of the objective 7 of a few hundreds of nanometres - a microscope where he does not need to adjust the objective 7 over the whole run of the first tape 5. This avoids adjusting over hundreds and thousands of samples and makes automated microscopy very effective.

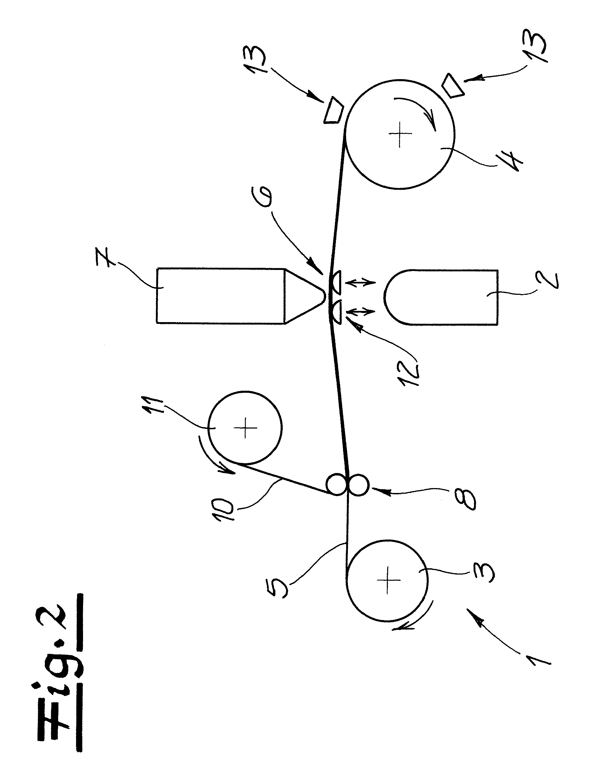

Figure 2 shows a second embodiment of the cassette 1. A second tape 10 is provided on a third reel 11 and is drawn towards the first tape 5. Both tapes 5, 10 are connected to each other with the help of an adhesive on the inner surface of the first tape 5. The combined tape 5, 10 is led through the enclosing element 8, over a support 12 made of two thin bars in the objective area 6 and finally wound onto the second reel 4. This second embodiment is especially suitable for samples that need drying before reaching the objective area 6. The first embodiment, on the contrary, is especially suitable for samples, which reach the objective area 6 in a liquid form.

## Claims

1. Cassette (1) for upgrading a microscope or for being an integral part of a microscope, comprising a first reel (3), a second reel (4) and a first tape (5), wherein the first tape (5) is wound onto the first reel (3) and can be wound onto the second reel (4), wherein the first reel (3) and the second reel (4) are spaced apart from each other so that an objective area (6) is reserved for positioning of an objective (7) of the microscope, wherein the first tape (5) is optical transparent, wherein the first tape (5) comprises a fluoropolymer.

2. Cassette (1) according to claim 1, wherein the fluoropolymer of the first tape (5) has a main chain, which main chain only comprises carbon atoms and wherein the fluoropolymer is preferably polytetrafluoroethylene, polychlorotrifluoroethylene, fluorinated ethylene propylene, perfluoroalkoxy alkane, or ethylene-tetrafluoroethylene.

3. Cassette (1) according to one of claims 1 or 2, wherein the first tape (5) comprises a fixed fluorescence dye.

4. Cassette (1) according to one of claims 1 to 3, wherein the fluoropolymer of the first tape (5) has undergone a surface treatment resulting in a lowered contact angle with water compared to an untreated fluoropolymer of the same type and wherein preferably the contact angle with water of the first tape (5) is lower than 95°, more preferably lower than 90° and very preferably lower than 85°.

5. Cassette (1) according to one of claims 1 to 4, wherein the cassette (1) is designed so that the first tape (5) experiences a tension at least in the objective area (6) and wherein preferably the tension is created by a tension apparatus (13).

6. Cassette (1) according to one of claims 1 to 5, wherein a support (12) is arranged in the objective area (6), wherein the first tape (5) can slide over the support (12) so that the height position of the first tape (5) in the objective area (6) is defined.

7. Cassette (1) according to one of claims 1 to 6, wherein the first tape (5) comprises in the objective area (6) at least two layers made of fluoropolymer.

8. Cassette (1) according to one of claims 1 to 7, comprising an enclosing element (8) for enclosing specimen, wherein the enclosing element (8) comprises preferably a pair of enclosing bars.

9. Cassette (1) according to claim 8, wherein the first tape (5) comprises an unfolded section upstream of the enclosing element (8) and a folded section downstream of the enclosing element (8).

10. Cassette (1) according to claim 8, comprising a third reel (11) and a second tape (10) and wherein the second tape (10) is wound onto the third reel (11) and wherein preferably the enclosing element (8) is designed so that it presses the first tape (5) and the second tape (10) together.

11. Cassette (1) according to one of claims 1 to 10, wherein the first tape (5) and/or the second tape (11) comprises an adhesive and/or wherein the cassette (1) comprises a welder, preferably an ultrasonic welder or a heat welder.

12. Microscope, comprising an objective (7) and a cassette (1), especially a cassette (1) according to one of claims 1 to 11, wherein the cassette (1) comprises a first reel (3), a second reel (4) and a first tape (5), wherein the first tape (5) is wound onto the first reel (3) and can be wound onto the second reel (4), wherein the first reel (3) and the second reel (4) are spaced apart from each other so that an objective area (6) is reserved for positioning of the objective (7), wherein the first tape (5) is optical transparent, and wherein the first tape (5) comprises a fluoropolymer.

13. Microscope according to claim 12, wherein the microscope is a fluorescence microscope, preferably an epifluorescence microscope, and wherein the microscope preferably comprises a lamp, preferably a lamp with a light emitting diode, which is designed to emit flash light.

14. Microscope according to claim 12 or 13, wherein the objective (7) comprises a numerical aperture above 0.3 and preferably a magnification of lower than factor 25.

15. Method for microscopic observation of specimen, wherein a microscope - especially a microscope according to claims 12 to 14 - comprises an objective (7) and a cassette (1), wherein the cassette (1) comprises a first reel (3), a second reel (4) and a first tape (5), wherein the first tape (5) is wound onto the first reel (3) and can be wounded onto the second reel (4), wherein the first reel (3) and the second reel (4) are spaced apart from each other so that an objective area (6) is reserved for the objective (7), wherein the first tape (5) is optical transparent, wherein the first tape (5) comprises a fluoropolymer,
wherein the first tape (5) passes the objective (7),
wherein the first tape (5) is then wound onto the second reel (4).

## Amended claims

### Amended claims in accordance with Rule 137(2) EPC.

1. Cassette (1) for upgrading a microscope or for being an integral part of a microscope, comprising a first reel (3), a second reel (4) and a first tape (5), wherein the first tape (5) is wound onto the first reel (3) and can be wound onto the second reel (4), wherein the first reel (3) and the second reel (4) are spaced apart from each other so that an objective area (6) is reserved for positioning of an objective (7) of the microscope, wherein the first tape (5) is optical transparent,
**characterized in that**
the first tape (5) comprises a fluoropolymer.

2. Cassette (1) according to claim 1, wherein the fluoropolymer is polytetrafluoroethylene, polychlorotrifluoroethylene, fluorinated ethylene propylene, perfluoroalkoxy alkane, or ethylene-tetrafluoroethylene.

3. Cassette (1) according to one of claims 1 or 2, wherein the first tape (5) comprises a fixed fluorescence dye.

4. Cassette (1) according to one of claims 1 to 3, wherein the fluoropolymer of the first tape (5) has undergone a surface treatment resulting in a lowered contact angle with water compared to an untreated fluoropolymer of the same type.

5. Cassette (1) according to one of claims 1 to 4, wherein the cassette (1) is designed so that the first tape (5) experiences a tension at least in the objective area (6).

6. Cassette (1) according to one of claims 1 to 5, wherein a support (12) is arranged in the objective area (6), wherein the first tape (5) can slide over the support (12) so that the height position of the first tape (5) in the objective area (6) is defined.

7. Cassette (1) according to one of claims 1 to 6, wherein the first tape (5) comprises in the objective area (6) at least two layers made of fluoropolymer.

8. Cassette (1) according to one of claims 1 to 7, comprising an enclosing element (8) for enclosing specimen.

9. Cassette (1) according to claim 8, wherein the first tape (5) comprises an unfolded section upstream of the enclosing element (8) and a folded section downstream of the enclosing element (8).

10. Cassette (1) according to claim 8, comprising a third reel (11) and a second tape (10) and wherein the second tape (10) is wound onto the third reel (11).

11. Cassette (1) according to one of claims 1 to 10, wherein the first tape (5) and/or the second tape (11) comprises an adhesive and/or wherein the cassette (1) comprises a welder.

12. Method for microscopic observation of specimen, wherein a microscope comprises an objective (7) and a cassette (1), wherein the cassette (1) comprises a first reel (3), a second reel (4) and a first tape (5), wherein the first tape (5) is wound onto the first reel (3) and can be wounded onto the second reel (4), wherein the first reel (3) and the second reel (4) are spaced apart from each other so that an objective area (6) is reserved for the objective (7), wherein the first tape (5) is optical transparent, , wherein the first tape (5) passes the objective (7), wherein the first tape (5) is then wound onto the second reel (4),
**characterized in that**
the first tape (5) comprises a fluoropolymer.
